# EUROPÄISCHE PATENTANMELDUNG

(11) **EP 0 934 848 A2**
(43) Veröffentlichungstag der Anmeldung: **11.08.1999**
(21) Anmeldenummer: 99100873.1
(22) Anmeldetag: 19.01.1999
(51) Int. Cl.: B60P 7/13

(54) **Verriegelungsvorrichtung für Container-Transportfahrzeuge**

(30) Priorität: 06.02.1998 DE 19804771
(71) Anmelder: Schneider Fahrzeug- und Containertechnik GmbH, 33649 Bielefeld (DE)
(72) Erfinder: Schneider, Thomas, 33659 Bielefeld (DE); Schneider, Horst, 33649 Bielefeld (DE)
(74) Vertreter: Thielking, Bodo, Dipl.-Ing.

(57) **Zusammenfassung**

Eine Verriegelungsvorrichtung für ein Container-Transportfahrzeug hat ein Gehäuse (1), das einen horizontal verschieblich gelagerten Sicherungsbolzen (2) zum Eingriff in eine Gegenöffnung am Container aufweist. An dem Gehäuse (1) ist ein um eine Achse schwenkbar angelenktes Trägerelement (3) mit einem Verriegelungsbolzen (4) vorgesehen, dessen Haltekopf (4a) zum Hintergreifen einer am Container vorgesehenen Gegenplatte mit Gegenöffnung dient. Der Haltekopf steht in Verriegelungsstellung über eine den Verriegelungsbolzen (4) umgebende Auflageplatte (5) des Träger nach oben vor. Das Trägerelement (3) ist derart verschwenkbar am Gehäuse (1) angelenkt, daß in Verriegelungsstellung des Verriegelungsbolzens (4) die Oberfläche (5a) der Auflageplatte (5) höher liegt als die am weitesten in vertikaler Richtung nach oben vorstehenden Bereiche des Gehäuses (1), oder daß die Oberfläche (5a) zumindest im wesentlichen bündig damit liegt.

## Beschreibung

Die Erfindung betrifft eine Verriegelungsvorrichtung für Container-Transportfahrzeuge nach dem Oberbegriff des Patentanspruchs 1.

Derartige Verriegelungsvorrichtungen sitzen an der Frontseite des Fahrzeugchassis. Sie dienen zur Verriegelung unterschiedlicher Arten von Containern. Für die Verriegelung sogenannter Gooseneck-Container dienen die horizontal verschieblich gelagerten Sicherheitsbolzen, die in eine stirnseitige Gegenöffnung des Containers eingeschoben werden.

Zum Verriegeln genormter anderer Container dient der Verriegelungsbolzen am schwenkbar mit dem Gehäuse verbundenen Trägerelement. Bei derartigen genormten Behältern halten die Gegenöffnungen für den Verriegelungsbolzen einen vorgegebenen festen Abstand von der Stirnwand des Containers ein. Die bekannten Verriegelungsvorrichtungen sind lediglich verwendbar für zwei Arten von Containern, nämlich Gooseneck-Container und genormte Container. Dies gilt unabhängig von der Lage der Schwenkachse, die bei einer bekannten Ausführungsform vertikal und bei einer anderen bekannten Ausführungsform horizontal ausgebildet ist.

Neben Gooseneck-Containern und genormten Containern mit vorgegebenem Abstandsmaß der Aufnahmeöffnungen von der Stirnwand des Containers gibt es aber auch Container, welche zwar die ebenfalls genormten Abstandsmaße zwischen den einzelnen Auflagepunkten einhalten, die jedoch mit ihrer Stirnwand über die Kontur des normgerechten Containers vorstehen. Derartige Container, die auch als Wildmaß-Container bezeichnet werden, können nicht mit Transportfahrzeugen transportiert werden, welche die als bekannt vorausgesetzte Verriegelungsvorrichtung aufweisen.

Um außer den Gooseneck Containern und den genormten Containern auch Wildmaß-Container fahren zu können, ist auch schon eine Lösung vorgeschlagen worden, bei der die gesamte Verriegelungsvorrichtung um eine horizontale Achse verschwenkbar am Transportfahrzeug gelagert ist. Eine derartige Lösung ist deshalb nachteilig, weil sie die Gesamtlänge des Fahrzeugchassis nach vorn verlängert.

Es sind auch bereits Verriegelungsvorrichtungen mit einem chassisfesten Gehäuse bekannt (DE 91 14 904.5 U1), das einen vertikal verfahrbaren Verriegelungsbolzen für Standard-Container und einen horizontal verschieblichen Sicherungsbolzen für Gooseneck-Container trägt. Diese bekannte Verriegelungsvorrichtung macht es erforderlich, für die unterschiedlichen rückwärtigen Fixierungsstellen von Standard-Containern einerseits und Gooseneck-Containern andererseits unterschiedliche Positionen der Spannvorrichtungen vorzusehen. Dies kann entweder dadurch erfolgen, daß man jeweils zwei mit Längsabstand angeordnete Spannvorrichtungen vorsieht oder jeweils eine Spannvorrichtung in Fahrtrichtung teleskopierbar macht. Eine derartige Lösung ist aufwendig und teuer.

Ausgehend von diesem Stand der Technik liegt der Erfindung die Aufgabe zugrunde, eine Verriegelungsvorrichtung der als bekannt vorausgesetzten Art so auszubilden, daß sie unter Beibehaltung eines einfachen Aufbaus zum Verriegeln von Gooseneck-Containern, von Normcontainern und von Wildmaß-Containern geeignet ist.

Die Lösung dieser Aufgabe erfolgt mit den Merkmalen des Patentanspruchs 1.

Im Gegensatz zu bekannten einschlägigen Verriegelungsvorrichtungen liegt beim Anmeldungsgegenstand die Oberfläche der Auflageplatte höher oder allenfalls bündig mit den am weitesten in vertikaler Richtung vorstehenden Bereichen des Gehäuses, welches den Sicherungsbolzen trägt. Hierdurch ist es möglich, daß der bei Wildmaß-Containern über den genormten Stirnwandabstand vorstehende Bereich das Gehäuse übergreifen kann und nicht mit dem Gehäuse kollidiert.

Bevorzugte Ausführungsformen der Erfindung sind in den Unteransprüchen beschrieben.

Die Erfindung wird nachstehend anhand der Zeichnung im einzelnen beschrieben. Es zeigen:
- Figur 1 -: einen vertikalen, zentralen Längsschnitt durch die Verriegelungsvorrichtung in einer unverriegelten Aufnahmeposition für einen Gooseneck-Container,
- Figur 2 -: die Darstellung gemäß Figur 1 in der Verriegelungsposition für den Gooseneck-Container,
- Figur 3 -: eine Seitenansicht der Verriegelungsvorrichtung in einer aufnahmebereiten Position für andere als Gooseneck-Container,

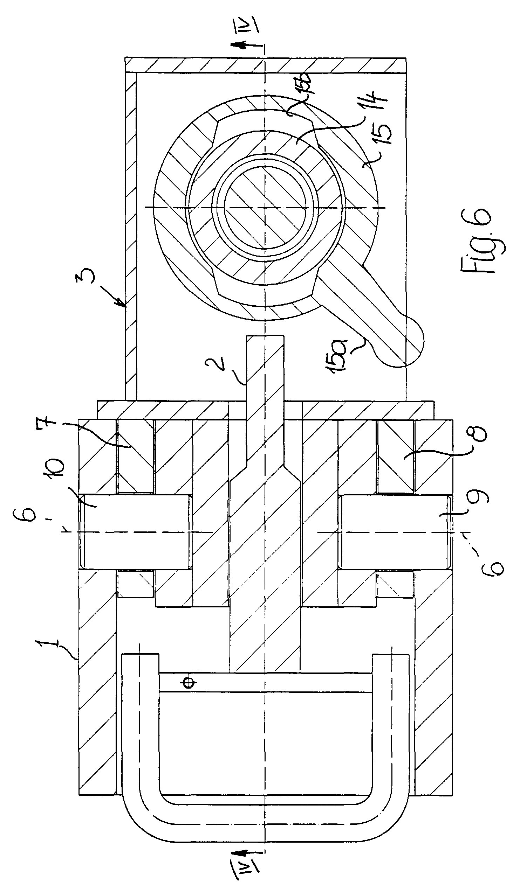

- Figur 4 -: einen vertikalen zentralen Längsschnitt durch die Verriegelungsvorrichtung in einer Lage gemäß Figur 3 und im Schnitt entlang Ebene IV-IV gemäß Figur 6,

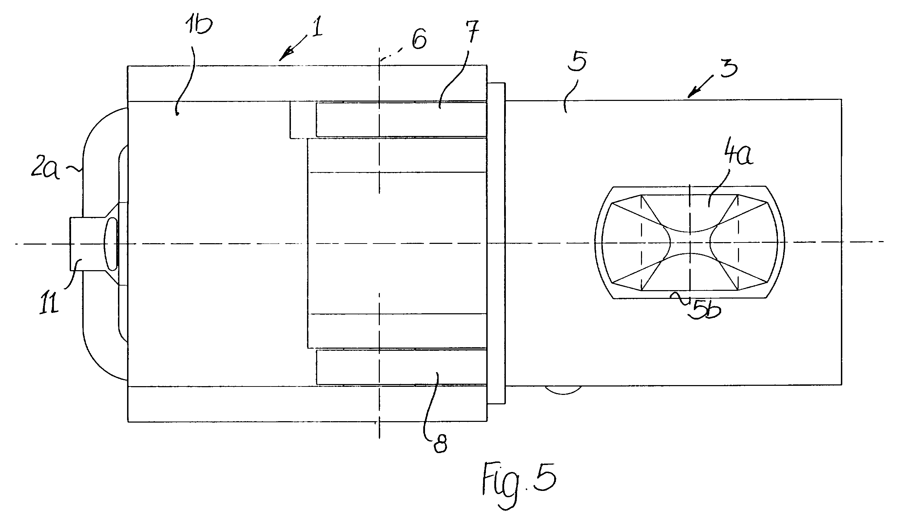

- Figur 5 -: eine Draufsicht in Richtung des Pfeils V gemäß Figur 3,
- Figur 6 -: einen Schnitt entlang Ebene VI-VI gemäß Figur 3.

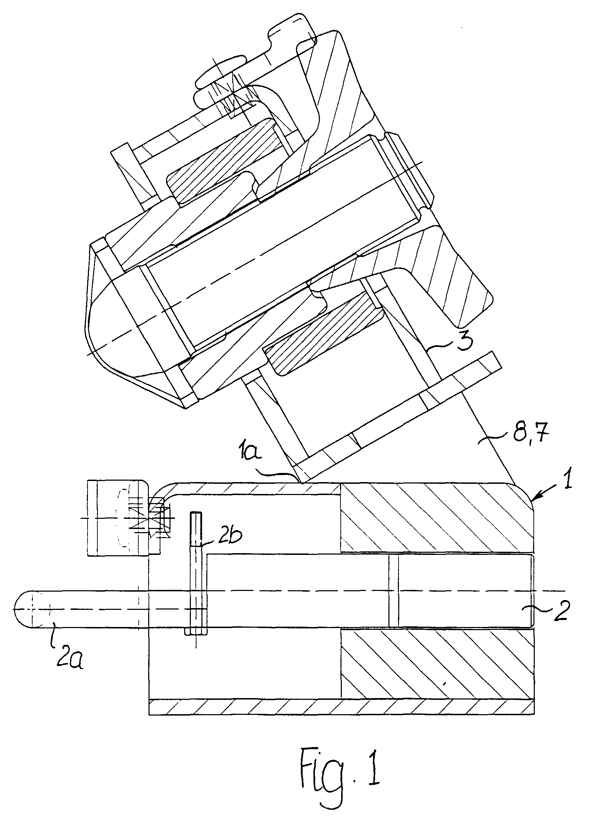

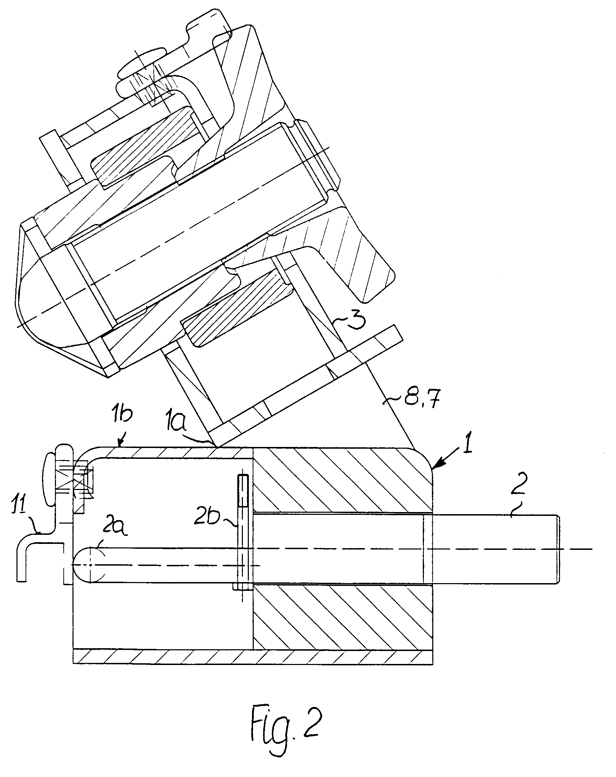

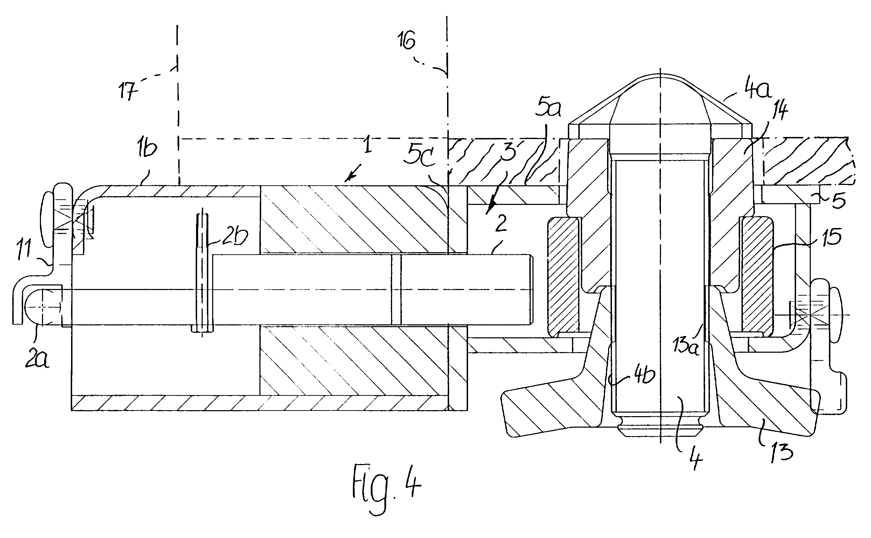

Die Verriegelungsvorrichtung besitzt ein Gehäuse 1, welches fest in horizontaler Ausrichtung auf einem nicht dargestellten Fahrzeugchassis angeordnet ist. Das Gehäuse 1 besitzt eine im wesentlichen ebene Oberfläche 1b sowie einen Anschlagbereich 1a der Oberfläche. An diesen Anschlagbereich 1a legt sich eine Kante eines mit 3 bezeichneten Trägerelements im hochgeschwenkten Zustand (s. Fig. 1 und 2) an. Das Trägerelement 3 ist um eine horizontale Achse 6 derart verschwenkbar am Gehäuse 1 gelagert, daß es zwischen den beiden Extrempositionen gemäß Fig. 1 und 4 verschwenkt werden kann. Das Trägerelement 3 trägt einen in vertikaler Richtung verfahrbaren Verriegelungsbolzen 4 mit einem Verriegelungskopf 4a.

In dem Gehäuse 1 ist ein Sicherungsbolzen 2 in horizontaler Richtung verschieblich gelagert. Er weist an seiner Rückseite einen Betätigungsgriff 2a auf und besitzt eine durch eine Schraube 2b gebildete Auszugsbegrenzung. In Fig. 1 ist die Verriegelungsvorrichtung so dargestellt, daß sie bereit ist zur Aufnahme eines Gooseneck-Containers. In dieser Aufnahmeposition liegt die Frontseite des Sicherungsbolzens 2 entweder bündig mit der umgebenden Stirnfläche des Gehäuses 1 oder gegenüber der Stirnfläche zurück. In der dargestellten Position kann der Gooseneck-Container auf das Chassis aufgesetzt werden. Zur Sicherung des Gooseneck-Containers wird der Sicherungsbolzen 2 mit dem Betätigungsgriff 2a in die Position gemäß Fig. 2 vorgeschoben. In dieser Position greift der über die frontale Stirnseite des Gehäuses 1 vorstehende Sicherungsbolzenbereich in eine nicht dargestellte Gegenöffnung eines stirnseitigen Befestigungsbereichs des Gooseneck-Containers ein.

An der Rückseite des Gehäuses 1 ist ein um eine horizontale Achse schwenkbarer Sicherungshebel 11 angelenkt, der den Sicherungsbolzen 2 in seiner vorgeschobenen Eingriffslage gemäß Fig. 2 sichert.

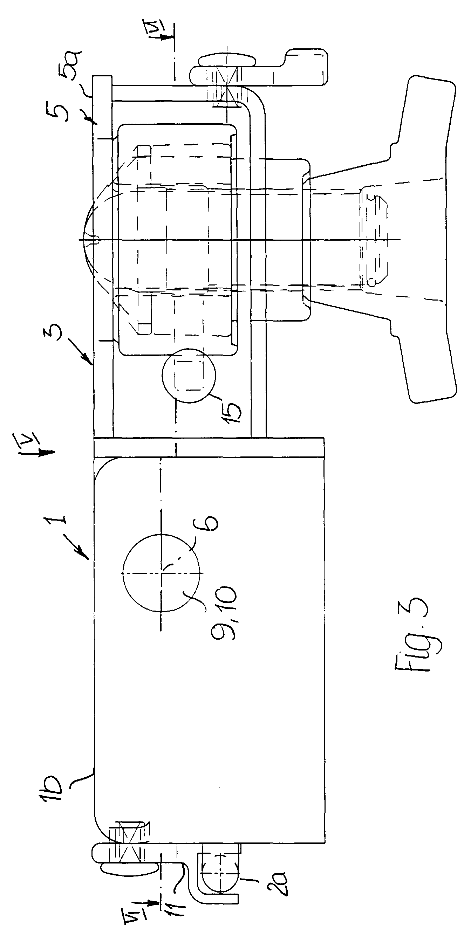

In Fig. 3 ist der am Gehäuse 1 angelenkte Träger 3 in die Horizontale verschwenkt. Der Träger 3 weist zueinander parallele Laschen 7 und 8 auf, welche zwischen zueinander parallele Gehäusebereiche des Gehäuses 1 greifen. Die Lasche 7 und die angrenzenden tragenden Gehäusebereiche des Gehäuses 1 werden von einem Zapfen 10 durchsetzt. Die Lasche 8 und die angrenzenden tragenden Gehäusebereiche des Gehäuses 1 werden von einem Zapfen 9 durchsetzt. Die Mittelachsen der Zapfen 9 und 10 fallen mit der Schwenkachse 6 zusammen.

In dem Trägerelement 3 ist der absenkbar gelagerte Verriegelungsbolzen 4 mit einem oberen Haltekopf 4a in vertikaler Richtung verschieblich gelagert. Eine Spannmutter 13 ist mit ihrem zentralen Gewinde 13a auf das Außengewinde 4b des Verriegelungsbolzens 4 aufgeschraubt. Die Spannmutter 13 übt einen nach unten wirkenden Zug auf den Verriegelungsbolzen 4 und den Haltekopf 4a aus und sichert eine am Boden eines Containers vorgesehene Gegenplatte, deren Öffnung der Haltekopf 4a durchsetzt. Eine Führungsbuchse 14 wird von einer Nutenbuchse 15 umschlossen. Die Nutenbuchse 15 besitzt eine unrunde Innenausnehmung 15b, deren Innenkontur mit der Außenkontur der Führungsbuchse 14 korrespondiert. Die Nutenbuchse 15 weist einen Handgriff 15a auf, mit dem die Nutenbuchse 15 verschwenkt werden kann. Die Konturen von Führungsbuchse 14 und Nutenbuchse 15 sind so gewählt, daß die Führungsbuchse in einer ersten Position (z.B. Fig. 4) auf der Nutenbuchse 15 aufliegt und in einer zweiten Position (Fig. 3) in die Nutenbuchse 15 derart abgetaucht ist, daß der Haltekopf 4a allenfalls geringfügig über die Oberseite einer Auflageplatte 5 vorsteht. Die unterschiedlichen Höhenlagen entsprechen also zwei unterschiedlichen, jeweils um 90° zueinander versetzten Schwenkpositionen.

Versenkbare Verriegelungsbolzen für Verriegelungsvorrichtungen von Containertransportfahrzeugen sind an sich bekannt, beispielsweise aus DE-AS 21 28 872 und DE 196 38 471 C1. Wesentlich im Zusammenhang mit der beschriebenen Ausführungsform ist lediglich das Vorsehen eines absenkbaren Verriegelungsbolzens. Es können unterschiedliche Betätigungsmechanismen vorgesehen sein.

Der Haltekopf 4a des Verriegelungsbolzens durchsetzt einen Durchbruch 5b einer Auflageplatte 5 des Trägerelements 3. Die Oberfläche 5a der Auflageplatte 5 ist im wesentlichen eben. Im dargestellten Ausführungsbeispiel liegen die Oberfläche 5a der Auflageplatte 5 des Trägerelements 3 und die Oberfläche 1b des Gehäuses 1 praktisch bündig.

Aus Fig. 4 ist die Wirkung dieser Anordnung ersichtlich:

Mit strichpunktierten Linien ist die maßgebliche Kontur des zu verriegelnden Bereichs eines Normcontainers dargestellt, wobei die vom Spannkopf durchgriffene Bodenplatte unregelmäßig schraffiert gezeichnet ist. Bei derartigen Normcontainern schließt die vertikale Stirnfläche 16 des Normcontainers zumindest im wesentlichen mit der Stirnfläche 5c des Trägerelements 3 ab.

Mit gestrichelten Linien sind die Verhältnisse bei einem Wildmaß-Container dargestellt. Bei einem Wildmaß-Container steht die dort mit 17 bezeichnete Stirnfläche über das Trägerelement 3 vor. Da die glattwandig ausgebildete Oberfläche 1b des Gehäuses 1 nicht höher liegt als die Oberfläche 5a der Auflageplatte 5, ist der überstehende Bereich des Wildmaß-Containers durch das Gehäuse 1 nicht behindert.

## Patentansprüche

1. Verriegelungsvorrichtung für Container-Transportfahrzeuge mit einem Gehäuse (1), das einen horizontal verschieblich gelagerten Sicherungsbolzen (2) zum Eingriff in eine Gegenöffnung am Container aufweist, ferner mit einem an dem Gehäuse (1) um eine Achse schwenkbar angelenkten Trägerelement (3) mit einem Verriegelungsbolzen (4), der einen Haltekopf (4a) zum Hintergreifen einer am Container vorgesehenen Gegenplatte mit Gegenöffnung trägt und in Verriegelungsstellung über eine den Verriegelungsbolzen umgebende Auflageplatte (5) nach oben vorsteht,
dadurch gekennzeichnet,
daß das Trägerelement (3) derart verschwenkbar am Gehäuse (1) angelenkt ist, daß in Verriegelungsstellung des Verriegelungsbolzens die Oberfläche (5a) der Auflageplatte höher liegt als die am weitesten in vertikaler Richtung nach oben vorstehenden Bereiche des Gehäuses (1) oder mindestens im wesentlichen bündig damit.

2. Verriegelungsvorrichtung nach Anspruch 1,
dadurch gekennzeichnet,
daß das Trägerelement (3) um eine horizontale Achse (6) verschwenkbar am Gehäuse (1) angelenkt ist.

3. Verriegelungsvorrichtung nach Anspruch 1 oder 2,
dadurch gekennzeichnet,
daß die horizontale Oberfläche (1a) des Gehäuses (1) glattflächig ausgebildet ist.

4. Verriegelungsvorrichtung nach einem oder mehreren der Ansprüche 1 bis 3,
dadurch gekennzeichnet,
daß der Verriegelungsbolzen (4) derart versenkbar im Trägerelement (3) gelagert ist, daß der Haltekopf (4a) im versenkten Zustand hinter der Oberfläche (5a) der Auflageplatte (5) zurück oder damit mindestens im wesentlichen bündig liegt.

5. Verriegelungsvorrichtung nach einem oder mehreren der Ansprüche 1 bis 4,
dadurch gekennzeichnet,
daß das Trägerelement zwei zueinander parallele Laschen (7 und 8) aufweist, die von zwei im Gehäuse gelagerten Zapfen (9 und 10) durchsetzt werden.

6. Verriegelungsvorrichtung nach einem oder mehreren der Ansprüche 1 bis 5,
dadurch gekennzeichnet,
daß das Trägerelement in seiner vorderen Verschwenklage an einem Anschlagbereich (1a) des Gehäuses (1) anliegt.
